Europäisches Patentamt

European Patent Office

Office européen des brevets

(19)

(11) Veröffentlichungsnummer: **0 057 295**
**A2**

(12) # EUROPÄISCHE PATENTANMELDUNG

(21) Anmeldenummer: **81201319.1**

(22) Anmeldetag: **01.12.81**

(51) Int. Cl.³: **B 60 R 25/02**

(30) Priorität: **29.01.81 DE 3102901**

(43) Veröffentlichungstag der Anmeldung: **11.08.82**
**Patentblatt 82/32**

(84) Benannte Vertragsstaaten: **DE FR GB IT SE**

(71) Anmelder: **KARL SCHMIDT GmbH, Christian-Schmidt-Strasse 8/12, D-7107 Neckarsulm (DE)**

(72) Erfinder: **Bauer, Wolfgang, Welzheimer Strasse 5, D-8757 Karlstein 1 (DE)**
Erfinder: **Grosser, Werner, Hauptstrasse 26, D-8751 Sulzbach (DE)**

(74) Vertreter: **Fischer, Ernst, Dr., Reuterweg 14, D-6000 Frankfurt am Main 1 (DE)**

(54) Vorrichtung zur Herstellung einer festen, jedoch lösbaren Verbindung zwischen einem Lenkrad und einem Schliessriegel.

(57) Bei einem mit einem Riegel verschließbaren Lenkrad ist die aus Druckguß bestehende Nabe lenksäulenseitig topfförmig ausgebildet, wobei deren konzentrisch zur Lenksäule verlaufender Flansch auf dem Umfang der Innenseite mit axial verlaufenden Nuten für das Einrasten des Schließriegels versehen ist.

Um den Herstellungsaufwand zu verringern, sind die Nuten bis auf Höhe der zwischen ihnen liegenden Stege durch eine einteilig mit dem Flansch der Nabe verbundene Druckgußwand verschlossen.

EP 0 057 295 A2

KARL SCHMIDT GMBH
Christian-Schmidt-Straße 8/12
7107 Neckarsulm

Prov. Nr. 8667 KSL

0057295

—1—

### Vorrichtung zur Herstellung einer festen, jedoch lösbaren Verbindung zwischen einem Lenkrad und einem Schließriegel

Die Erfindung betrifft eine Vorrichtung zur Herstellung einer festen, jedoch lösbaren Verbindung zwischen einem mit der Lenksäule verbundenen Lenkrad und einem durch einen Schließzylinder beweglichen Schließriegel, bestehend aus einer lenksäulenseitig topfförmig ausgebildeten, aus Druckguß bestehenden Lenkradnabe, deren konzentrisch zur Lenksäule verlaufender zylinderförmiger Flansch auf dem Umfang der Innenseite mit einer Vielzahl axial verlaufender Nuten für das Einrasten des Schließriegels versehen ist nach Patent .. .. ... (Patentanmeldung P 29 45 937.8).

Vor die Nuten ist auf der der Lenkradnabe abgewandten Seite ein fest mit den zwischen den Nuten bestehenden Stegen verbundener Metallring angebracht, der verschraubt, vernietet oder mit Kerbnägel befestigt ist. Der Metallring kann auch in eine in den Stirnseiten der Stege umlaufende Nute eingepreßt sein. Eine solche Vorrichtung bietet den Vorteil, daß die Schließverbindung nicht von außen zu öffnen und das Lenkrad von der Lenksäule im verriegelten Zustand nicht abziehbar ist.

Nachteilig ist jedoch, daß die Herstellung der mechanischen Verbindung zwischen dem Metallring und den Stegen mit einem beachtlichen Aufwand verbunden ist.

Es ist daher die Aufgabe der vorliegenden Erfindung, bei der Vorrichtung gemäß der eingangs beschriebenen Bauart die Stirnseiten der Nuten mit einfachen Mitteln zu verschließen.

Die Lösung dieser Aufgabe besteht darin, daß die Nuten stirnseitig bis auf Höhe der zwischen den Nuten vorhandenen Stege durch eine einteilig mit dem Flansch der Lenkradnabe verbundene Druckgußwand verschlossen sind.

Um die dazu erforderlichen Kerne nach dem Gießen und Erstarren der Lenkradnabe ziehen zu können, sind zweckmäßigerweise radial verlaufende Durchbrechungen in dem zylinderförmigen Flansch angeordnet, die durch einen auf den Außenumfang des Flansches aufgesetzten Ring verschlossen sind.

Eine weitere Möglichkeit der Anordnung der Durchbrechungen besteht darin, daß diese vom Boden her axial verlaufend angeordnet sind.

Die Durchbrechungen sind lenkradseitig durch einen in den Nabenboden eingesetzten Ring verschlossen.

Ein weiteres Merkmal der erfindungsgemäßen Vorrichtung besteht darin, daß die Nuten bzw. Stege in unregelmäßigen Abständen angeordnet sind, um zu verhindern, daß das Lenkrad in bestimmten Positionen einrasten kann.

Die Erfindung ist in der Zeichnung beispielhaft dargestellt und wird nachfolgend näher erläutert:

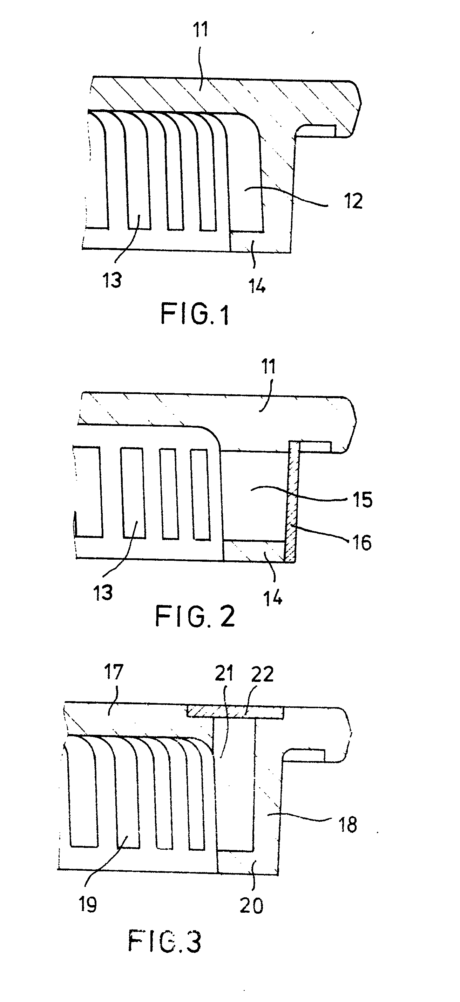

Die Fig. 1 zeigt einen Teilquerschnitt der im Druckgußverfahren hergestellten Lenkradnabe 11. Auf der Innenseite des mit der Lenkradnabenunterseite einstückig verbundenen Flansches 12 sind in regelmäßigen Abständen axial verlaufende Nuten 13 angeordnet, die stirnseitig durch eine einstückig mit dem Flansch 12 verbundene Druckgußwand 14 verschlossen sind.

Fig. 2 zeigt den Querschnitt durch die Lenkradnabe gemäß Fig. 1 im Bereich einer radialen Durchbrechung 15, über die die für das Gießen erforderlichen Kerne gezogen werden können. Die radiale Durchbrechung 15 ist durch einen auf dem Außenumfang des Flansches aufgesetzten Stahlring 16 verschlossen.

Die Fig. 3 stellt einen Teilquerschnitt einer im Druckgußverfahren hergestellten Lenkradnabe 17 dar. Auf der Innenseite des Lenkradnabenflansches 18 sind in regelmäßigen Abständen axial verlaufende Nuten 19 angeordnet, die stirnseitig durch eine einstückig mit dem Flansch 18 verbundene Druckgußwand 20 verschlossen sind. Um die Kerne ziehen zu können, sind vom Boden der Lenkradnabe 17 her axial verlaufende Durchbrechungen 21 angeordnet, due durch den lenkradseitig in die Nabe eingesetzten Ring 22 verschlossen sind.

PATENTANSPRÜCHE
----------------

1. Vorrichtung zur Herstellung einer festen, jedoch lösbaren Verbindung zwischen einem mit der Lenksäule verbundenen Lenkrad und einem durch einen Schließzylinder bewegbaren Schließriegel, bestehend aus einer lenksäulenseitig topfförmig ausgebildeten, aus Druckguß bestehenden Lenkradnabe, deren konzentrisch zur Lenksäule verlaufender zylinderförmiger Flansch auf dem Umfang der Innenseite mit einer Vielzahl axial verlaufender Nuten für das Einrasten des Schließriegels versehen ist nach Patent .. .. ... (Patentanmeldung P 29 45 937.8), dadurch gekennzeichnet, daß die Nuten (13, 19) stirnseitig bis auf Höhe der zwischen ihnen verlaufenden Stege durch eine einteilig mit dem Flansch (12, 18) verbundene Druckgußwand (14, 20) verschlossen sind.

2. Vorrichtung nach Anspruch 1, gekennzeichnet durch in dem Flansch (12, 18) angeordnete radiale Durchbrechungen (15), die auf dem Außenumfang des Flansches durch einen aufgesetzten Ring (16) verschlossen sind.

3. Vorrichtung nach Anspruch 1, gekennzeichnet durch vom Boden der Lenkradnabe (17) her angeordnete axial verlaufende Durchbrechungen (21), die lenkradseitig durch einen in den Lenkradnabenboden eingesetzten Ring (22) verschlossen sind.

4. Vorrichtung nach einem oder mehreren der Ansprüche 1 bis 3, dadurch gekennzeichnet, daß die Nuten (13, 19) in unregelmäßigen Abständen angeordnet sind.

FIG.1

FIG. 2

FIG.3